# EUROPEAN PATENT SPECIFICATION

(11) **EP 2 709 766 B1**
(45) Date of publication and mention of the grant of the patent: **19.04.2017**
(21) Application number: 12724768.2
(22) Date of filing: 16.05.2012
(51) Int. Cl.: B03B 9/04, B01D 11/02

(54) **METHOD FOR PURIFYING CONTAMINATED BOTTOM ASH**
VERFAHREN ZUR REINIGUNG VON KONTAMINIERTER BODENASCHE
PROCÉDÉ PERMETTANT DE PURIFIER DES CENDRES RÉSIDUELLES CONTAMINÉES

(30) Priority: 19.05.2011 NL 2006813
(43) Date of publication of application: 26.03.2014
(73) Proprietor: Baggermaatschappij Boskalis B.V., 3356 LK Papendrecht (NL)
(72) Inventor: KOK, Arjan Christian, NL-3311 AK Dordrecht (NL)
(74) Representative: Geurts, Franciscus Antonius
(86) International application number: PCT/NL2012/050339
(87) International publication number: WO 2012/169882

(56) References cited:
- EP-A1- 0 630 687
- WO-A1-02/18069
- DE-A1- 2 747 078
- JP-A- 2005 001 910

## Description

### BACKGROUND OF THE INVENTION

The invention relates to a method for purifying contaminated bottom ash.

Bottom ash, particularly incinerator granulates or incinerator bottom ash,is a stony material that remains after incinerating waste, particularly domestic waste, in an incinerator. Bottom ash is suitable as construction material for building infrastructure, for instance for building raised roads. However, at leaving the incinerator, bottom ash contains contaminations which in the long run may flush out of the bottom ash due to exposure to for instance rainwater or groundwater and may thus end up in the groundwater. On the basis of environmental considerations this is undesirable.

WO 02/18069 A1 discloses a method for releasing sulphates from bottom ash from waste incineration plants, wherein said bottom ash is washed in water with the addition of a soluble carbonate or hydrogen carbonate.

JP 2005 001910 A discloses a method for converting incinerated ash into a cement raw material, whereby the incinerated ash with a high chlorine concentration is prevented from entering a cement-production process. The incinerated ash discharged from waste incineration facilities is housed in housing facilities and subsequently washed for a long period of time with water sprinkled by a sprinkler.

EP 0 630 687 A1 discloses a method of treating residues coming from effluents of plants for incinerating household waste and similar waste (residues), in particular so-called fly ash coming from the electrostatic filtration treatment and/or from the residues from neutralising the flue gases by lime treatment, wherein the residues coming from the effluents are washed separating, using a filter, on the one hand a solution containing the majority of the soluble salts, principally calcium chloride, and on the other hand a filter cake stripped to a large extent of the soluble salts, the washing water being continuously recycled, while at the same time taking off a purge which is concentrated with soluble salts.

DE 27 47 078 A1 discloses a method for recycling of waste with water-soluble fractions, in particular chlorides, by forming a salt slurry, wherein ferrous slag is crushed into bulbous heap, then subjected to the washing procedure for the withdrawal of salt proportions, wherein the resulting salt slurry is treated under the action of centrifugal forces and wherein the resulting salt solution is fed to an evaporation process.

In a known method for purifying contaminated bottom ash use is made of a purification process in which contaminants that are bonded to fine fractions and organic substances together with said fine fractions and organic substances are rinsed out of the bottom ash using scouring water. The scouring water is then given a follow-up treatment in order to extract the contaminants from the scouring water. The contaminants, however, are not just bonded to the fine fractions or organic substances. A substantial part of the contaminants consists of free salts that were formed during the incineration of domestic waste. Said salts dissolve in the scouring water described above, the so-called leaching out. With each quantity of scouring water a limited quantity of salts is leached out of the bottom ash. In a follow-up treatment step the scouring water then has to be stripped of the salts in order to be able to discharge the scouring water in an environmental-friendly manner. According to the known method it is attempted to leach out the residual salt using an additional quantity of scouring water. The required quantity of scouring water may amount up to ten times the volume of the volume of the bottom ash to be purified. This excess quantity of scouring water however also has to be subjected to a follow-up treatment in order to extract the contaminants that have washed along with it.

Because of the use of large quantities of scouring water and its follow-up treatment, the method described above is inefficient and very costly. In actual practice an alternative method is therefore chosen, in which contaminated bottom ash or merely partially purified bottom ash is additionally insulated from the environs in which it is placed, for instance by the wrapping bottom ash in water-retaining material. In this method, inadequate insulation, faulty insulation, incorrectly installed insulation or insulation wasting away causes the risk of environmental pollution as a result of undesirable fractions such as salts and heavy metals leaching out to be great.

It is an object of the invention to provide an efficient method for purifying contaminated bottom ash.

### SUMMARY OF THE INVENTION

The invention provides a method for in a device purifying contaminated bottom ash, wherein the contaminants in the bottom ash comprise at least a component of salt, wherein the device is provided with a salt section, wherein the method comprises the introduction of the contaminated bottom ash in the salt section, rinsing the contaminated bottom ash with salty scouring water that is substantially saturated with salt dissolved therein, wherein the salt present in the contaminated bottom ash is rinsed out as undissolved salt particles by the substantially saturated salty scouring water. The undissolved salt particles that have washed along can subsequently be separated easily from the salty scouring water.

In one embodiment the method furthermore comprises the separation of the salt rinsed out as undissolved particles from the substantially saturated salty scouring water, recycling the substantially saturated salty scouring water and again rinsing the contaminated bottom ash with the recycled, substantially saturated salty scouring water. The dissolved salt in the salty souring water need not be extracted from the salty scouring water, as the proper action of the salty scouring water is indeed based on its saturation with dissolved salt. The salty scouring water can thus be continuously recycled.

In one embodiment the method comprises the rinsing of the contaminated bottom ash with merely partially saturated scouring water wherein the salt present in the contaminated bottom ash dissolves in the merely partially saturated scouring water, collecting the partially saturated scouring water that has flushed through the contaminated bottom ash, repeatedly recycling the collected and partially saturated scouring water and rinsing the contaminated bottom ash with the recycled merely partially saturated scouring water, wherein the merely partially saturated scouring water is increasingly saturated with salts and finally almost no more salt from the contaminated bottom ash dissolves in the substantially saturated salty scouring water, as a result of which the substantially saturated salty scouring water is obtained. In this way the device can be started up with scouring water that is not yet saturated, wherein after a number of recycles sufficient salt has been dissolved in the scouring water such that the salt still present in the bottom ash is rinsed out as salt particles along with the saturated scouring water.

In one embodiment at least 70% of the salty scouring water per cycle is recycled, preferably at least 80%, most preferably at least 90%. With respect to the known method for purifying bottom ash, in which an excess of scouring water is required to be able to dissolve or leach out a large part of the salts in the contaminated bottom ash, the method according to the invention has the advantage that a substantially fixed quantity of salty scouring water can be recycled in the salt section, without separation of the salts dissolved therein being required.

In one embodiment the bottom ash and the scouring water comprise organic and/or inorganic salts from the group comprising: chlorides, hydroxides, sulphates, sulphites, sulphides, nitrates, nitrites, nitrides, phosphates, phosphites, phosphides, carbonates, fluorides, bromides and iodides.

In one embodiment the device furthermore comprises a desalting section, wherein the method comprises the transfer of the rinsed bottom ash from the salt section to the desalting section, in the desalting section rinsing the bottom ash with fresh or desalted water, wherein the salty scouring water still present in the bottom ash is rinsed out of the bottom ash. In that way bottom ash is obtained having a very low salt content, as a result of which no or considerably fewer additional costly desalting treatments need to be carried out. The final objective may be obtaining bottom ash from which no or hardly any more salts leach out, as a result of which the bottom ash can be suitable as construction material and as aggregate in concrete and asphalt.

In one embodiment the device is provided with separation means from the group comprising, grids, magnets, washing sieve drums, sieves, log washers, spirals, separators, hydrocyclones, eddy current devices, flotation devices, sedimentation plants, flocculation devices, pressure devices and upflow columns. Depending on the separation properties of the separation means a selective separation of fractions from the contaminated bottom ash can be effected. The final objective may be obtaining bottom ash from which no or hardly any more undesirable fractions, such as salt and heavy metals, leach out as a result of which the bottom ash can be suitable as construction material and as aggregate in concrete and asphalt.

In one embodiment the method comprises by means of the separation means separating fractions from the bottom ash, particularly fractions from the group comprising sand, granulate, crude rubble, fine rubble, ferrous metals, non-ferrous metals, organic material, fine sludge particles and salt. By separating and/or removing fractions it can be counteracted that contaminants pollute the environment after laying bottom ash in-situ. The final objective may be obtaining bottom ash from which no or hardly any more undesirable fractions leach out, as a result of which the bottom ash can be suitable as construction material and as aggregate in concrete and asphalt.

In one embodiment the method comprises by means of the separation means separating sandy bottom ash and granulated bottom ash. The separation of the purified bottom ash into sandy bottom ash and granulated bottom ash makes it possible to adjust the mixing ratio of the sand and the granulate to the utilisation of the purified bottom ash.

### SHORT DESCRIPTION OF THE DRAWINGS

The invention will be elucidated on the basis of the exemplary embodiments shown in the attached schematic drawings, in which:
figure 1 shows a schematic view of a device for purifying bottom ash;
figure 2 shows a detail of the device according to section II in figure 1;
figure 3 shows a detail of the device according to section III in figure 1; and
figure 4 shows a detail of the device according to section IV in figure 1.

### DETAILED DESCRIPTION OF THE DRAWINGS

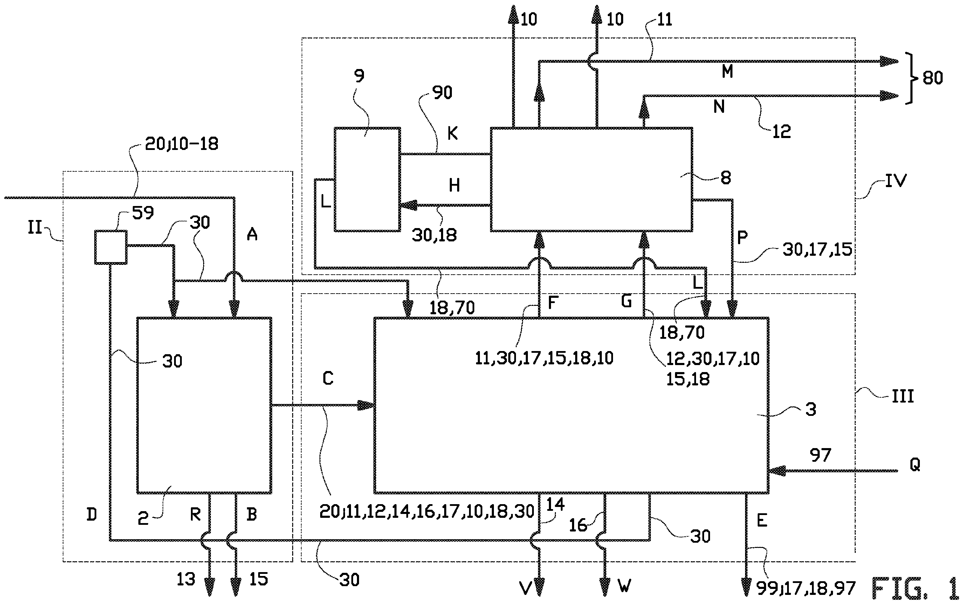

Figure 1 schematically shows a device 1 for wet cleaning or wet purification of contaminated bottom ash 20. Bottom ash, particularly incinerator granulates or incinerator bottom ash, is a stony or cinder-like material that remains after incinerating waste, particularly domestic waste or industrial waste, in an incinerator that is not shown. In this example, when leaving the incinerator, apart from the desired fractions of crude granulate 11 and fine incinerator granulate or sand 12, the bottom ash also contains undesirable fractions such as crude rubble 13, fine rubble 14, ferrous metal 15, non-ferrous metal 10, organic material 16, fine sludge particles 17 and salt 18. The contaminated bottom ash 20 is separated in the incinerator 1 into granulate 11, sand 12, the organic material 16, sludge 98 and all other undesirable fractions mentioned above. The purified bottom ash 80 is then suitable as construction material for building infrastructure, for instance filling material for building raised roads or as aggregate substitute in asphalt or concrete.

As shown in figure 1 the device 1 is provided with a supply section 2 for entering the contaminated bottom ash 20, a salt section 3 for separating the granulate 11, the sand 12, the organic material 16, the salt 18, the sludge 98 and all other undesirable fractions mentioned above, and a desalting section 8 for the follow-up treatment of the granulate 11 and the sand 12. The device 1 is provided with a scouring water distribution system 59 supplying scouring water 30 to several separation systems to be further described in the supply section 2 and the salt section 3 for rinsing the contaminated bottom ash 20 in a purifying manner.

In the following description the sections 2, 3, 8 described above of the device 1 are further described.

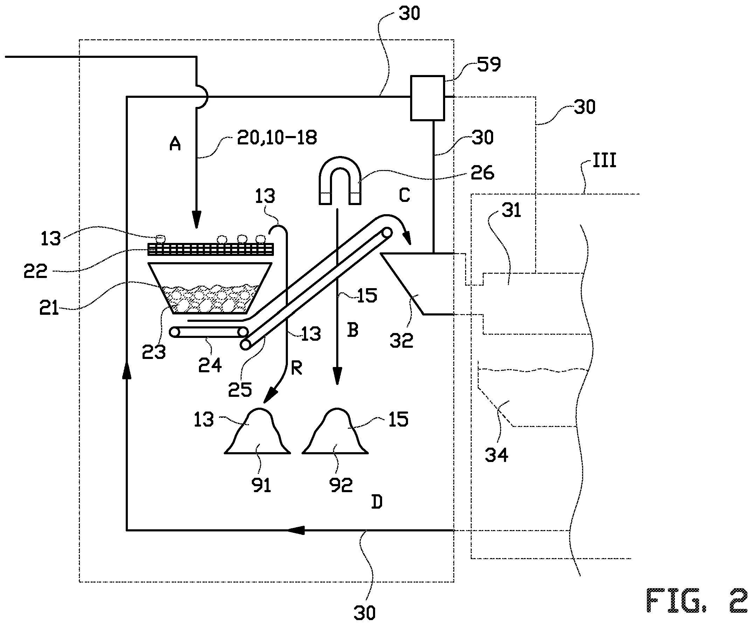

As shown in figure 2 the contaminated bottom ash 20 is supplied in a feeding direction A to the supply section 2 of the device 1. The contaminated bottom ash 20 at that moment contains granulate 11, sand 12, crude rubble 13, fine rubble 14, ferrous metal 15, non-ferrous metal 10, organic material 16, fine sludge particles 17 and salt 18. The salt 18 contains particularly organic and/or inorganic salts from the group comprising: chlorides, hydroxides, sulphates, sulphites, sulphides, nitrates, nitrites, nitrides, phosphates, phosphites, phosphides, carbonates, fluorides, bromides and iodides. Examples of metals occurring in salts are, iron, aluminium, copper, nickel, cobalt, zinc, sodium, calcium, potassium, magnesium and barium. In principle a large part of the elements of the periodic table of elements can be found back in the composition of the contaminated bottom ash 20, depending on the composition of the incinerated domestic waste or industrial waste.

The supply section 2 comprises a charging bunker 21 in which the contaminated bottom ash 20 is dumped in the feeding direction A. The charging bunker is provided with a grid 22 stopping crude rubble 13 and allowing the other components of the contaminated bottom ash 20 to pass through. The crude rubble 13 is dumped in a first discharge direction R into a first depot 91. The charging bunker 21 is provided with a dispensing device 23 for dispensing the contaminated bottom ash 20 in doses. Straight below the dispensing device 23 of the charging bunker 21 the supply section 2 is provided with a first supply conveyor belt 24 and a second supply conveyor belt 25 which from the charging bunker 21 define an upward first conveyance path C towards the salt section 3 of the device 1. A magnet 26 has been disposed over the second supply conveyor belt 25, which magnet by means of magnetism removes crude parts of ferrous metal 15 from the contaminated bottom ash 20 and dumps them in the second discharge direction B into the second depot 92.

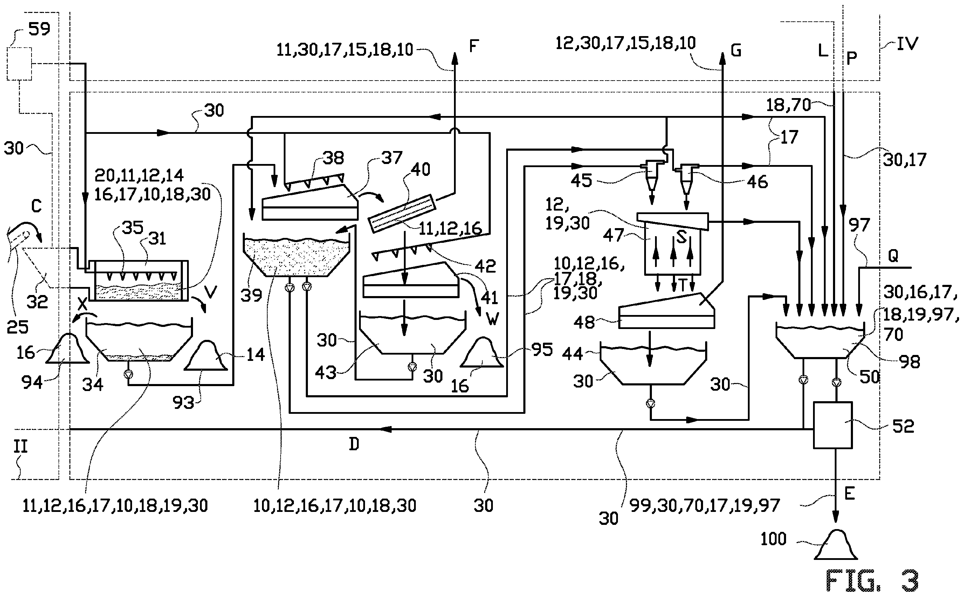

As shown in figure 3 the contaminated bottom ash 20 is subsequently transferred via the first conveyance path C from the supply section 2 to the salt section 3. Scouring water 30 is supplied from the scouring water distribution system 59. At the start of the purification the scouring water 30 will be relatively unsaturated. The salt 18 present in the contaminated bottom ash 20 will be leached out of it and dissolve or deposit in the merely partially saturated scouring water 30. Optionally any other suitable salt that can be dissolved in the scouring water 30 can be added to the scouring water 30 in order to accelerate the saturation process. The merely partially saturated scouring water 30 is recycled within the salt section 3 in a manner to be further described, as a result of which the merely partially saturated scouring water 30 will be increasingly saturated with salts 18 from the contaminated bottom ash 20. Finally hardly any more salt 18 from the contaminated bottom ash 20 will dissolve or deposit in the substantially saturated salty scouring water 30. In the following description the salty scouring water 30 will mean the scouring water 30 that has already become substantially saturated with salts 18 after having been recycled a number of times through salt section 3. The substantially saturated, salty scouring water 30 has reached a balanced situation in which salts 18 leach out and dissolve in equal amounts. On balance the salty scouring water 30 remains substantially saturated.

The advantage of such saturated, salty scouring water 30 is that the residual salt 18 present in the contaminated bottom ash 20 starts acting like solid particles or salt crystals, as a result of which the salt 18 present in the contaminated bottom ash 20 is rinsed out as undissolved salt particles 19 by the saturated salty scouring water 30. The undissolved salt particles 19 that are washed along can subsequently be easily separated in a dewatering step as sludge particles, for instance in a separation step further to be described. The dissolved salt 18 in the salty scouring water 30 need not be extracted from the salty scouring water 30, as the proper action of the salty scouring water 30 is indeed based on its saturation with dissolved salt 18. As a result the salty scouring water 30 can be continuously recycled. With respect to the known method for purifying bottom ash, in which an excess of unsaturated scouring water is required for dissolving or leaching out a large part of the salts in the contaminated bottom ash, the method according to the invention has the advantage that a fixed quantity of salty scouring water 30 can be recycled in the salt section 3, without separation of the salts 18 dissolved therein being required.

The salt section 3 comprises a washing sieve drum 31 with an inlet funnel 32 for receiving the contaminated bottom ash 20 supplied via the first conveyance path C. The washing sieve drum 31 is provided with a first spraying system 35 that is connected to the scouring water distribution system 59 and that sprays the contaminated bottom ash 20 with salty scouring water 30. The washing sieve drum 31 comprises perforations 33 that allow the contaminated bottom ash 20 to pass through to a first flotation tank, sedimentation tank or slurry tank 34 positioned below the washing sieve drum 31. Crude fractions that are larger than the perforations 33 in the washing sieve drum 31 are left behind in the washing sieve drum 31 and are dumped in a third discharge direction V into a third depot 93.

In the first slurry tank 34 the fractions of the contaminated bottom ash 20 that have been allowed to pass through by the washing sieve drum 31 are exposed to a scouring water flow that is set into motion in the slurry tank 34. The scouring water flow causes a separation between light fractions floating on the salty scouring water 30 and heavier depositing fractions of the contaminated bottom ash 20. The floating organic fractions 16 are flushed out of the first slurry tank 34 and dumped in a fourth discharge direction X into a fourth depot 94. The deposited fractions are pumped over to a first sieve 37. A second spraying system 38 is disposed over the first sieve 37, which spraying system sprays the deposited fractions of the contaminated bottom ash 20 with salty scouring water 30. The first sieve 37 causes the granulate 11 of the bottom ash 20 to be left behind on the first sieve 37, whereas sand 12 together with the fine ferrous metals 15, the fine non-ferrous metals 10, the fine organic fractions 16, the fine sludge particles 17, the undissolved salt particles 19 that have washed along and salty scouring water 30 is flushed through the first sieve 37 and ends up in a second slurry tank 39 positioned below the first sieve 37. The granulate 11 is dumped from the first sieve 37 into a log washer 40, in which the granulate 11 is additionally stripped of adhering organic material 16. When it leaves the log washer 40 the granulate 11 has a desiccant content of approximately 50-80%. Subsequently the granulate 11 is transferred via a second conveyance path F to the desalting section 8 of the device 1, where it will be subjected to a dewatering treatment to be further described.

The salty scouring water 30 and the organic material 16 separated from the granulate 11 from the log washer 40 are dumped on a second sieve 41. A third spraying system 42 connected to the scouring water distribution system 59, is positioned over the second sieve 41. The third spraying system 42 sprays salty scouring water 30 on the salty scouring water 30 from the log washer 40, wherein the organic material 16 carried along by it is left behind on the second sieve 41. Optional sandy mineral parts that have been carried along from the log washer 40 by the salty scouring water 30, pass through the second sieve 41 together with the salty scouring water 30 and are collected by a collection tank 43 below the second sieve 41. The salty scouring water 30 optionally with the sandy minerals are pumped from the collection tank 43 to the second slurry tank 39 in order to mixed there with the sand 12, fine organic particles 16, fine sludge particles 17, fine non-ferrous metals 10, the undissolved salt particles 19 that have washed along and salty scouring water 30 with salt 18 dissolved therein that have already been dumped from the first sieve 37 into the second slurry tank 39. The sieved organic material 16 is dumped in the form of pulp in a third discharge direction W into a fifth depot 95.

The sand 12, the fine sludge particles 17, the fine organic particles 16, the dissolved salt 18, the undissolved salt 19 and the salty scouring water 30 are then pumped from the second slurry tank 39 to a first hydrocyclone 45 and a second hydrocyclone 46. In the hydrocyclones 45, 46 a whirlpool or vortex is set into motion which effects a separation of the fine sludge particles 17 of a dimension of up to 40 µm or up to 63 µm which as a result of the vortex rise to the upper exits of the hydrocyclones 45, 46. The fine organic particles 16, the fine sludge particles 17 and the undissolved salt 19 are discharged to a sludge tank 50.

The heavier sand 12 and the dissolved salt 18 are subsequently released from the bottom exits of the hydrocyclones 45, 46 into a detimberer or upflow column 47. In the upflow column 47 an upward flow S of salty scouring water 30 is set into motion, through which the sand 12 descends in an opposite downward direction as a result of gravity T. The light components of the sand 12, such as fine organic particles and sludge particles of a dimension of up to 40 µm or up to 63 µm which have not yet been separated from the sand 12 in previous separation steps, are then upwardly flushed out of the sand 12 whereas the sand 12 descends further. The salty scouring water 30 with the light components from the sand 12 is discharged to the sludge tank 50 via the upper side of the upflow column 47. At the bottom side of the upflow column 47 the sand 12 is dumped on a third sieve 48 which allows the salty scouring water 30 mixed with the sand 12 to pass through. The salty scouring water 30 that the third sieve 48 allows to pass through is collected in a second collection tank 44 and is pumped from there to the sludge tank 50. Via the third conveyance path G, the sand 12 that is left behind on the third sieve 48 is subsequently transferred to the desalting section 8 of the device 1, where it will be subjected to a dewatering treatment to be further described.

The salty scouring water 30 including the organic material 16, the fine sludge particles 17, the dissolved salt 18 and the undissolved salt particles 19 carried along, that has been supplied from the hydrocyclones 45, 46 and the second collection tank 44 to the sludge tank 50 is treated via a supply path Q by means of flocculants 97 so that a thickened sludge material 98 is created. From the sludge tank 50 via a pre-thickening step that is not shown, the sludge material 98 is subsequently supplied to a pressure device 52, where the salty scouring water 30 is mechanically pressed out of the thickened sludge material 98 in order to be left with a relatively dry sludge cake 99 of fine organic particles 16, fine sludge particles 17, undissolved salt particles 19 that have washed along and a relatively small residue of the salty scouring water 30 and flocculants 97. As an alternative for a pressure device 52 a sieve belt device or a separation through centrifugal forces can be used. The dry sludge cake 99 is discharged in a fifth discharge direction E to a sixth depot 96.

As a result of gravity a part of the salty scouring water 30 already runs out of the sludge tank 50. The remaining salty scouring water 30 is pressed out of the thickened sludge material 98 by the pressure device 52. The scouring water 30 pressed out is reused or recycled by passing it back to the scouring water distribution system 59 via a recycling path D.

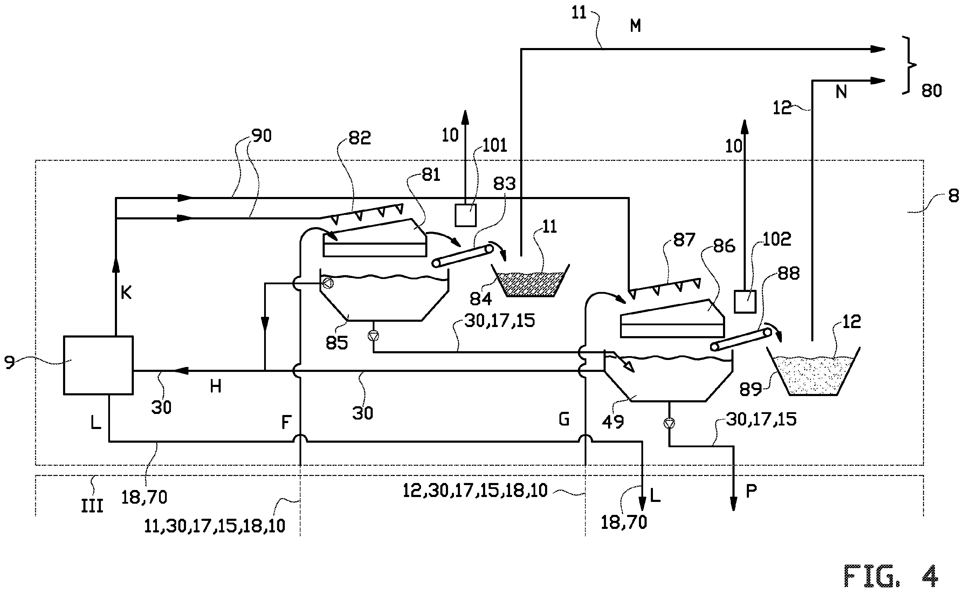

As shown in figure 4 the scouring water 30 carries along and transfers the granulate 11 and the sand 12 separately via the second conveyance path F and a third conveyance path G, respectively, to the desalting section 8. Fine sludge particles 17, fine ferrous metals 15 and fine non-ferrous metals 10 can still be present in the granulate 11, the sand 12 and the scouring water 30.

The granulate 11 and the salty scouring water 30 from the second conveyance path F are disposed on a first dewatering sieve 81 in order to be rinsed and sieved on it. The first dewatering sieve 81 allows the salty scouring water 30, the fine sludge particles 17 and the fine ferrous metals 15 to pass through to a third collection tank 85 positioned below it.

From the third collection tank 85 via a fourth collection tank 49 to be further described, a part of the salty scouring water 30 rinsed out, the fine sludge particles 17 and the fine ferrous metals 15 is passed back via return path P to the sludge tank 50 of the salt section 3. Another part of the rinsed out salty scouring water 30 is pumped from the third collection tank 85 via a first pump path H from the desalting section 8 to the water treatment unit 9. In the water treatment unit 9 the rinsed out salty scouring water 30 is desalted in which way sweet or desalted scouring water 90 is obtained. In a second pump path K the desalted scouring water 90 is passed back to the desalting section 8 in order to be sprayed on the granulate 11 via a fourth spraying system 82 positioned over the first dewatering sieve 81. In that way a large part of the salty scouring water 30 still present in the granulate 11 can be rinsed out as yet. In the manner described above the salty scouring water 30 is rinsed out of the granulate 11 by means of desalted scouring water 90 so that hardly any more salty scouring water 30 is present in the granulate 11. In that way clean granulate 11 of a low salt content is obtained, in which way the bottom ash obtained meets the environmental requirements and as a result of which no or considerably fewer additional costly desalting treatments need to be carried out. The purified granulate 11 is dumped on a third conveyor belt 83, where a first eddy current device 101 is disposed. The eddy current device 101 effects a circulating induction current that separates non-ferrous metals 10 such as aluminium, copper, yellow brass, zinc and lead from the granulate 11. The granulate 11, stripped of the non-ferrous metals 10 is subsequently dumped into a first container 84.

In the same manner the sand 12 and the salty scouring water 30 from the third conveyance path G are disposed on a second dewatering sieve 86 in order to be rinsed and sieved on it. The second dewatering sieve 96 allows the salty scouring water 30, the fine sludge particles 17 and the fine ferrous metals 15 to pass through to a fourth collection tank 49 positioned below it.

A part of the salty scouring water 30 rinsed out, the fine sludge particles 17 and the fine ferrous metals 15 are passed back from the fourth collection tank 49 via pass-back path P to the sludge tank 50 of the salt section 3. Another part of the rinsed out salty scouring water 30 from the fourth collection tank 49 is joined with the rinsed out salty scouring water 30 from the third collection tank 85 and is pumped via a first pump path H from the desalting section 8 to the water treatment unit 9. In the water treatment unit 9 the salty scouring water 30 is desalted in the manner described above, after which via a second pump path K the desalted scouring water 90 obtained is passed back to the desalting section 8 in order to be sprayed on sand 12 via a fifth spraying system 87 positioned over the second dewatering sieve 86. In that way a large part of the salty scouring water 30 still present in the sand 12 can be rinsed out as yet. In the manner described above the salty scouring water 30 is rinsed out of the sand 12 by means of desalted scouring water 90 so that hardly any more salty scouring water 30 is present in the sand 12. In that way clean sand 12 of a low salt content is obtained, in which way the bottom ash obtained meets the environmental requirements and as a result of which no or considerably fewer additional costly desalting treatments need to be carried out. The purified sand 12 is dumped on a fourth conveyor belt 88, where a second eddy current device 102 is disposed. The eddy current device 102 effects a circulating induction current that separates non-ferrous metals 10 such as aluminium, copper, yellow brass, zinc and lead from the sand 12. The sand 12, stripped of the non-ferrous metals 10 is subsequently dumped into a second container 89.

The purified granulate 11 and the purified sand 12 are discharged from the device 1 from the first container 84 and the second container 89, respectively, via a first discharge path M and a second discharge path N, respectively, in order to be offered separately or in a certain mixing ratio as purified bottom ash 80 to customers. The mixing ratio depends on the utilization of the purified bottom ash. As filling material for raising roads the purified bottom ash 80 can for instance consist of a mixture of sand 12 and granulate 11, whereas for purified bottom ash 80 as gravel substitute in asphalt or concrete a composition of mainly granulate 11 is more suitable.

The salt 18 that has been extracted or separated from the salty scouring water 30 in the dewatering unit 9, in this example is passed back in the form of brine 70 via a return path L from the dewatering unit 9 to the sludge tank 50 in the salt section 3 of the device 1.

The above description is included to illustrate the operation of preferred embodiments of the invention and not to limit the scope of the invention. Starting from the above explanation many variations that fall within the scope of the present invention as claimed will be evident to an expert.

## Claims

1. Method for in a device purifying contaminated bottom ash, wherein the contaminants in the bottom ash comprise at least a component of salt, wherein the device is provided with a salt section, wherein the method comprises the introduction of the contaminated bottom ash in the salt section, rinsing the contaminated bottom ash with salty scouring water that is substantially saturated with salt dissolved therein, wherein the salt present in the contaminated bottom ash is rinsed out as undissolved salt particles by the substantially saturated salty scouring water.

2. Method according to claim 1, wherein the method furthermore comprises the separation of the salt rinsed out as undissolved particles from the substantially saturated salty scouring water, recycling the substantially saturated salty scouring water and again rinsing the contaminated bottom ash with the recycled, substantially saturated salty scouring water.

3. Method according to claim 1 or 2, wherein the method comprises the rinsing of the contaminated bottom ash with merely partially saturated scouring water wherein the salt present in the contaminated bottom ash dissolves in the merely partially saturated scouring water, collecting the partially saturated scouring water that has flushed through the contaminated bottom ash, repeatedly recycling the collected and partially saturated scouring water and rinsing the contaminated bottom ash with the recycled merely partially saturated scouring water, wherein the merely partially saturated scouring water is increasingly saturated with salts and finally almost no more salt from the contaminated bottom ash dissolves in the substantially saturated salty scouring water, as a result of which the substantially saturated salty scouring water is obtained.

4. Method according to any one of the preceding claims, wherein at least 70% of the salty scouring water per cycle is recycled, preferably at least 80%, most preferably at least 90%.

5. Method according to any one of the preceding claims, wherein the bottom ash and the scouring water comprise organic and/or inorganic salts from the group comprising: chlorides, hydroxides, sulphates, sulphites, sulphides, nitrates, nitrites, nitrides, phosphates, phosphites, phosphides, carbonates, fluorides, bromides and iodides.

6. Method according to any one of the preceding claims, wherein the device furthermore comprises a desalting section, wherein the method comprises the transfer of the rinsed bottom ash from the salt section to the desalting section, in the desalting section rinsing the bottom ash with fresh or desalted water, wherein the salty scouring water still present in the bottom ash is rinsed out of the bottom ash.

7. Method according to any one of the preceding claims, wherein the device is provided with separation means from the group comprising, grids, magnets, washing sieve drums, sieves, log washers, spirals, separators, hydrocyclones, eddy current devices, flotation devices, sedimentation plants, flocculation devices, pressure devices and upflow columns.

8. Method according to claim 7, wherein the method comprises by means of the separation means separating fractions from the bottom ash, particularly fractions from the group comprising sand, granulate, crude rubble, fine rubble, ferrous metals, non-ferrous metals, organic material, fine sludge particles and salt.

9. Method according to claim 7 or 8, wherein the method comprises by means of the separation means separating sandy bottom ash and granulated bottom ash.

## Patentansprüche

1. Verfahren zum Reinigen, in einer Vorrichtung, von verunreinigter Bodenasche, wobei die Verunreinigungen in der Bodenasche mindestens eine Komponente von Salz umfassen, wobei die Vorrichtung mit einem Salzabschnitt ausgestattet ist, wobei das Verfahren Folgendes umfasst: das Einführen der verunreinigten Bodenasche in den Salzabschnitt, das Spülen der verunreinigten Bodenasche mit salzigem Scheuerwasser, das im Wesentlichen mit darin gelöstem Salz gesättigt ist, wobei das Salz, das in der verunreinigten Bodenasche vorliegt, als ungelöste Salzteilchen durch das im Wesentlichen gesättigte salzige Scheuerwasser herausgespült wird.

2. Verfahren nach Anspruch 1, wobei das Verfahren ferner die Trennung des Salzes, das als ungelöste Teilchen aus dem im Wesentlichen gesättigten salzigen Scheuerwasser herausgespült ist, das Rückführen des im Wesentlichen gesättigten salzigen Scheuerwassers und das erneute Spülen der verunreinigten Bodenasche mit dem rückgeführten, im Wesentlichen gesättigten salzigen Scheuerwasser umfasst.

3. Verfahren nach Anspruch 1 oder 2, wobei das Verfahren Folgendes umfasst: das Spülen der verunreinigten Bodenasche mit nur teilweise gesättigtem Scheuerwasser, wobei das Salz, das in der verunreinigten Bodenasche vorliegt, sich in dem nur teilweise gesättigten Scheuerwasser löst, das Auffangen des teilweise gesättigten Scheuerwasser, das durch die verunreinigte Bodenasche gespült worden ist, das wiederholte Rückführen des aufgefangenen und teilweise gesättigten Scheuerwassers und das Spülen der verunreinigten Bodenasche mit dem rückgeführten nur teilweise gesättigten Scheuerwasser, wobei das nur teilweise gesättigte Scheuerwasser zunehmend mit Salzen gesättigt wird und schließlich fast kein Salz aus der verschmutzten Bodenasche mehr sich in dem im Wesentlichen gesättigten salzigen Scheuerwasser löst, wodurch das im Wesentlichen gesättigte salzige Scheuerwasser erhalten wird.

4. Verfahren nach irgendeinem der vorhergehenden Ansprüche, wobei mindestens 70 % des salzigen Scheuerwassers pro Zyklus, bevorzugt mindestens 80 %, am bevorzugtesten mindestens 90 % rückgeführt werden.

5. Verfahren nach irgendeinem der vorhergehenden Ansprüche, wobei die Bodenasche und das Scheuerwasser organische und/oder anorganische Salze aus der Gruppe, umfassend: Chloride, Hydroxide, Sulfate, Sulfite, Sulfide, Nitrate, Nitrite, Nitride, Phosphate, Phosphite, Phosphide, Carbonate, Fluoride, Bromide und Iodide umfassen.

6. Verfahren nach irgendeinem der vorhergehenden Ansprüche, wobei die Vorrichtung ferner einen Entsalzungsabschnitt umfasst, wobei das Verfahren das Übertragen der gespülten Bodenasche von dem Salzabschnitt zu dem Entsalzungsabschnitt, in dem Entsalzsungsabschnitt das Spülen der Bodenasche mit frischem oder entsalztem Wasser umfasst, wobei das salzige Scheuerwasser, das immer noch in der Bodenasche vorliegt, aus der Bodenasche herausgespült wird.

7. Verfahren nach irgend einem der vorhergehenden Ansprüche, wobei die Vorrichtung mit einem Trennmittel aus der Gruppe umfassend Gitter, Magnete, Waschsiebtrommeln, Siebe, Rundholzwäscher, Spiralen, Separatoren, Hydrozyklone, Wirbelstromvorrichtungen, Flotationsvorrichtungen, Absetzanlagen, Ausflockungsvorrichtungen, Druckvorrichtungen und Aufstromsäulen ausgestattet ist.

8. Verfahren nach Anspruch 7, wobei das Verfahren mittels des Trennmittels, das Trennen von Fraktionen von der Bodenasche, insbesondere Fraktionen aus der Gruppe umfassend Sand, Granulat, unverarbeiteten Schutt, feinen Schutt, eisenhaltige Metalle, Nichteisenmetalle, organisches Material, feine Schlammpartikel und Salz umfasst.

9. Verfahren nach Anspruch 7 oder 8, wobei das Verfahren mittels des Trennmittels das Trennen von sandhaltiger Bodenasche und granulierter Bodenasche umfasst.

## Revendications

1. Procédé pour purifier, dans un dispositif, des cendres résiduelles contaminées, dans lequel les contaminants dans les cendres résiduelles comprennent au moins un composant de sel, dans lequel le dispositif est doté d'une section sel, dans lequel le procédé comprend l'introduction des cendres résiduelles contaminées dans la section sel, le rinçage des cendres résiduelles contaminées avec de l'eau de lavage salée qui est sensiblement saturée avec du sel qui y est dissous, dans lequel le sel présent dans les cendres résiduelles contaminées est éliminé par rinçage sous la forme de particules de sel non dissoutes par l'eau de lavage salée sensiblement saturée.

2. Procédé selon la revendication 1, dans lequel le procédé comprend, en outre, la séparation du sel éliminé par rinçage sous la forme de particules non dissoutes de l'eau de lavage salée sensiblement saturée, le recyclage de l'eau de lavage salée sensiblement saturée et, de nouveau, le rinçage des cendres résiduelles contaminées avec l'eau de lavage salée sensiblement saturée recyclée.

3. Procédé selon la revendication 1 ou 2, dans lequel le procédé comprend le rinçage des cendres résiduelles contaminées avec une eau de lavage simplement partiellement saturée dans lequel le sel présent dans les cendres résiduelles contaminées se dissout dans l'eau de lavage simplement partiellement saturée, la collecte de l'eau de lavage partiellement saturée qui s'est écoulée dans les cendres résiduelles contaminées, la répétition du recyclage de l'eau de lavage partiellement saturée collectée et le rinçage des cendres résiduelles contaminées avec l'eau de lavage simplement partiellement saturée recyclée, dans lequel l'eau de lavage simplement partiellement saturée est de plus en plus saturée avec des sels et finalement presque plus de sel des cendres résiduelles contaminées ne se dissout dans l'eau de lavage salée sensiblement saturée, en résultat de quoi l'eau de lavage salée sensiblement saturée est obtenue.

4. Procédé selon l'une quelconque des revendications précédentes, dans lequel au moins 70 % de l'eau de lavage salée par cycle est recyclée, préférentiellement au moins 80 %, plus préférentiellement au moins 90 %.

5. Procédé selon l'une quelconque des revendications précédentes, dans lequel les cendres résiduelles et l'eau de lavage comprennent des sels organiques et/ou inorganiques du groupe comprenant : les chlorures, les hydroxydes, les sulfates, les sulfites, les sulfures, les nitrates, les nitrites, les nitrures, les phosphates, les phosphites, les phosphures, les carbonates, les fluorures, les bromures et les iodures.

6. Procédé selon l'une quelconque des revendications précédentes, dans lequel le dispositif comprend, en outre, une section de dessalage, dans lequel le procédé comprend le transfert des cendres résiduelles rincées de la section sel à la section de dessalage, dans la section de dessalage le rinçage des cendres résiduelles avec de l'eau fraîche ou dessalée, dans lequel l'eau de lavage salée toujours présente dans les cendres résiduelles est éliminée des cendres résiduelles par rinçage.

7. Procédé selon l'une quelconque des revendications précédentes, dans lequel le dispositif est doté de moyens de séparation du groupe comprenant, des grilles, des aimants, des tambours tamiseurs de lavage, des tamis, des désintégrateurs, des spirales, des séparateurs, des séparateurs hydroclones, des dispositifs à courants de Foucault, des dispositifs de flottation, des installations de sédimentation, des dispositifs de floculation, des dispositifs à pression et des colonnes à flux ascendant.

8. Procédé selon la revendication 7, dans lequel le procédé comprend, à l'aide des moyens de séparation, la séparation de fractions des cendres résiduelles, notamment les fractions du groupe comprenant le sable, un granulat, les gravats bruts, les gravats fins, les métaux ferreux, les métaux non ferreux, un matériau organique, les particules fines de boue et le sel.

9. Procédé selon la revendication 7 ou 8, dans lequel le procédé comprend, à l'aide des moyens de séparation, la séparation des cendres résiduelles sablonneuses et des cendres résiduelles granuleuses.
